# EUROPEAN PATENT APPLICATION

(11) **EP 4 841 993 A1**
(43) Date of publication of application: **18.11.2026**
(21) Application number: 25831362.6
(22) Date of filing: 13.03.2025
(51) Int. Cl.: H04N 21/41, H04N 21/431, H04N 21/436, H04N 21/442, H04N 21/462, G06F 3/14

(54) **DISPLAY DEVICE AND OUTPUT METHOD THEREOF**

(30) Priority: 21.06.2024 KR 20240081125
(71) Applicant: Samsung Electronics Co., Ltd., Suwon-si, Gyeonggi-do 16677 (KR)
(72) Inventor: KIM, Sangwoo, Suwon-si, Gyeonggi-do 16677 (KR); GANBOLD, Battushig, Suwon-si, Gyeonggi-do 16677 (KR); KIM, Hyunseok, Suwon-si, Gyeonggi-do 16677 (KR); SEO, Kideok, Suwon-si, Gyeonggi-do 16677 (KR); HEO, Min, Suwon-si, Gyeonggi-do 16677 (KR)
(74) Representative: Appleyard Lees IP LLP
(86) International application number: PCT/KR2025/099806
(87) International publication number: WO 2025/264095

(57) **Abstract**

A display apparatus includes: memory configured to store instructions and image quality-related configuration information; a display; a first input/output interface including a display port; a second input/output interface; and at least one processor, wherein the instructions, when executed by the at least one processor, cause the display apparatus to: transmit the image quality-related configuration information to a source apparatus through the display port; based on image data corresponding to the image quality-related configuration information being received from the source apparatus through the display port, control the display to display an image corresponding to the image data, identify an output abnormality of the display apparatus based on the received image data, and update the image quality-related configuration information based on the identified output abnormality, and transmit the updated image quality-related configuration information to the source apparatus through the display port.

## Description

### Technical Field

The present disclosure relates to a display apparatus and a method for outputting an image based on changed image data.

### Background Art

With the development of electronic technology, various types of display apparatuses are being used in daily life. Among these display apparatuses, there may be a display apparatus implemented in a form connected to another display apparatus.

In the past, when the display apparatus is set to multi-stream transport (MST) mode and a high dynamic range (HDR) function is used, screen abnormality output symptoms may occur due to various causes such as compatibility.

Therefore, a solution to screen abnormality output symptoms of the display apparatus is needed.

### [Disclosure]

### [Technical Solution]

According to an aspect of the disclosure, a display apparatus includes: memory configured to store instructions and image quality-related configuration information; a display; a first input/output interface including a display port; a second input/output interface; and at least one processor, wherein the instructions, when executed by the at least one processor, cause the display apparatus to: transmit the image quality-related configuration information to a source apparatus through the display port; based on image data corresponding to the image quality-related configuration information being received from the source apparatus through the display port, control the display to display an image corresponding to the image data, identify an output abnormality of the display apparatus based on the received image data, and update the image quality-related configuration information based on the identified output abnormality, and transmit the updated image quality-related configuration information to the source apparatus through the display port, and wherein the image quality-related configuration information includes information about whether another display apparatus is connected to the second input/output interface.

The updated image quality-related configuration information may be configuration information that causes the source apparatus to transmit the image data based on a configuration of the image data being changed.

The instructions, when executed by the at least one processor, may cause the display apparatus to, based on image data, having a configuration that is changed according the updated image quality-related configuration information, being received from the source apparatus , control the display to display an image based on the image data having the configuration that is changed.

The instructions, when executed by the at least one processor, may cause the display apparatus to, based on a multi-stream transport (MST) mode and a function of improving an image quality of the display apparatus being used at a same time: identify the output abnormality of the display apparatus based on the received image data, and update the image quality-related configuration information based on the identified output abnormality, and the MST mode is a mode in which a plurality of streams are received corresponding to each of a plurality of images from one port of the first input/output interface, a first image corresponding to the display apparatus among the plurality of images is displayed through the display, and a second image corresponding to the another display apparatus is displayed through the another display apparatus.

The instructions, when executed by the at least one processor, may cause the display apparatus to change high bit rate (HBR) grade information in the image quality-related configuration information to a specification lower than a currently set HBR grade, and the HBR is information that determines a transmission speed of the image data.

The instructions, when executed by the at least one processor, may cause the display apparatus to change DisplayPort (DP) version information in the image quality-related configuration information to a version lower than a currently set DP version.

The instructions, when executed by the at least one processor, may cause the display apparatus to change information supporting a multi-stream transport (MST) mode in the image quality-related configuration information to information supporting a single-stream transport (SST) mode, and the SST mode is a mode in which the display apparatus is set to receive one data stream from the source apparatus.

The instructions, when executed by the at least one processor, may cause the display apparatus to: identify the output abnormality of the another display apparatus based on the image data received from the another display apparatus through the second input/output interface, update the image quality-related configuration information based on the identified output abnormality, and transmit the updated image quality-related configuration information to the source apparatus through the display port.

The instructions, when executed by the at least one processor, may cause the display apparatus to: update the image quality-related configuration information based on information about the output abnormality received from the another display apparatus through the second input/output interface; and transmit the updated image quality-related configuration information to the source apparatus through the display port.

The instructions, when executed by the at least one processor, may cause the display apparatus to, based on the updated image quality-related configuration information being received from the another display apparatus through the second input/output interface, transmit configuration information related to the received image quality to the source apparatus through the display port.

The image quality-related configuration information may include information about at least one of whether the another display apparatus is connected, resolution, a refresh rate, a bandwidth, a color, multi-stream transport mode information, high bit rate (HBR) specification information, a DisplayPort (DP) version, and a high dynamic range (HDR).

The instructions, when executed by the at least one processor, may cause the display apparatus to identify the received image data as the output abnormality of the display apparatus based on the received image data being out of a specification range supported by the display apparatus based on the image quality-related configuration information.

According to an aspect of the disclosure, a method for outputting to a display apparatus, includes: based on image data being received from a source apparatus, identifying an output abnormality of the display apparatus based on the image data; updating image quality-related configuration information based on the identified output abnormality; transmitting the updated image quality-related configuration information to the source apparatus; and based on image data corresponding to the updated image quality-related configuration information being received from the source apparatus, displaying an image corresponding to the received image data corresponding to the updated image quality-related configuration information, wherein the image quality-related configuration information includes information about whether another display apparatus is connected.

The updated image quality-related configuration information may be configuration information that causes the source apparatus to transmit the image data having a configuration that is changed.

According to an aspect of the disclosure, a non-transitory computer-readable recording medium including a program executing a method for outputting to a display apparatus, wherein the method includes: based on image data being received from a source apparatus, identifying an output abnormality of the display apparatus based on the image data; updating image quality-related configuration information based on the identified output abnormality; transmitting the updated image quality-related configuration information to the source apparatus; and based on image data corresponding to the updated image quality-related configuration information being received from the source apparatus, displaying an image corresponding to the received image data corresponding to the updated image quality-related configuration information, and wherein the image quality-related configuration information includes information about whether another display apparatus is connected.

### Description of Drawings

FIG. 1 is a diagram illustrating an operation of a display apparatus according to at least one embodiment of the disclosure;
FIG. 2 is a block diagram illustrating a configuration of the display apparatus according to at least one embodiment of the disclosure;
FIG. 3 is a diagram illustrating an example in which the display apparatus according to at least one embodiment of the disclosure updates configuration information;
FIG. 4 is a diagram illustrating an example in which the display apparatus according to at least one embodiment of the disclosure updates the configuration information;
FIG. 5 is a diagram illustrating an example in which the display apparatus according to at least one embodiment of the disclosure updates the configuration information;
FIG. 6 is a diagram illustrating an MST mode and an SST mode in the display apparatus according to at least one embodiment of the disclosure;
FIG. 7 is a block diagram illustrating a configuration of a source apparatus according to at least one embodiment of the disclosure;
FIG. 8 is a diagram illustrating an example in which the display apparatus according to at least one embodiment of the disclosure updates the configuration information;
FIG. 9 is a sequence diagram illustrating an operation order of the display apparatus and the source apparatus according to at least one embodiment of the disclosure; and
FIG. 10 is a flowchart illustrating a method for outputting a display apparatus according to at least one embodiment of the disclosure.

### [Mode for Invention]

General terms that are currently widely used are selected as terms used in describing various embodiments of the disclosure in consideration of functions in the disclosure, but may be changed according to the intention of those skilled in the art or a judicial precedent, the emergence of a new technique, and the like. In addition, in a specific case, terms arbitrarily chosen by an applicant may exist. In this case, the meaning of such terms will be mentioned in detail in a corresponding description portion of the disclosure. Therefore, the terms used in embodiments of the disclosure are to be defined on the basis of the meaning of the terms and the contents throughout the disclosure rather than simple names of the terms.

Various embodiments of the disclosure and terms used therein are not intended to limit the technical features described in the disclosure to specific embodiments, and should be understood to include various changes, equivalents, or substitutes of the embodiments.

Throughout the drawings, similar or related components will be denoted by similar reference numerals.

A singular form of a noun corresponding to an item may include one or more of the items, unless the context clearly dictates otherwise.

In the disclosure, each phrase such as "A or B," "at least one of A and B," "at least one of A or B," "A, B, or C," "at least one of A, B and C," and "at least one of A, B, or C" may include any one of items listed together in the corresponding one of those phrases, or all possible combinations thereof. For example, the expression, "at least one of a, b, and c," should be understood as including only a, only b, only c, both a and b, both a and c, both b and c, or all of a, b, and c.

The terms "first", "second", or the like, may be used only to distinguish one component from the other components, and do not limit the corresponding components in other respects (e.g., importance or a sequence).

When any (e.g., first) component is referred to as "coupled" or "connected" to another (e.g., second) component with or without the term "functionally" or "communicatively", it means that any component may be connected to another component directly (e.g., in a wired manner), wirelessly, or through a third component.

It will be understood that terms "include" or "have" used in the disclosure, specify the presence of features, numerals, steps, operations, components, parts mentioned in the present specification, or a combination thereof, but do not preclude the presence or addition of one or more other features, numerals, steps, operations, components, parts, or a combination thereof.

When a component is "connected," "coupled," "supported," or "contacted" with another component, this includes not only cases where the components are directly connected, coupled, supported, or contacted, but also cases where the components are indirectly connected, coupled, supported or contacted through a third component.

When a component is located "on" another component, this includes not only cases where a component is in contact with another component, but also cases where another component exists between the two components.

The term "and/or" includes a combination of a plurality of related described components or any one of the plurality of related described components.

In the disclosure, a "module" or a "~er/or" may perform at least one function or operation, and be implemented as hardware or software or be implemented as a combination of hardware and software. In addition, a plurality of "modules" or a plurality of 'portions' may be integrated in at least one module and be implemented by at least one processor except for a "module" or a "portion" that needs to be implemented by specific hardware.

Various elements and regions in the drawings are schematically illustrated. Therefore, the spirit of the disclosure is not limited by relatively sizes or intervals illustrated in the accompanying drawings.

In the disclosure, the term user may refer to a person using an electronic apparatus or an apparatus used by the person.

Hereinafter, an embodiment of the disclosure will be described in detail with reference to the accompanying drawings.

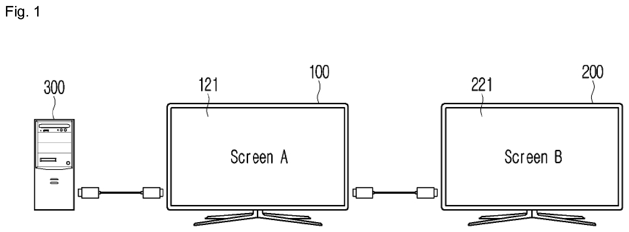

FIG. 1 is a diagram illustrating an operation of a display apparatus according to at least one embodiment of the disclosure.

Referring to FIG. 1, a display system includes a source apparatus 300, a first display apparatus 100, and a second display apparatus 200. As illustrated, each apparatus may be sequentially connected to a DP cable.

In FIG. 1, the display apparatus 100 is illustrated in the form of a monitor, but the display apparatus 100 may be implemented as various types of display apparatuses such as a TV, a laptop, a monitor, a kiosk, a tablet PC, an electronic picture frame, a mobile phone, a large format display (LFD), a digital signage, a digital information display (DID), a video wall, and a projector display. However, the display apparatus 100 is not limited thereto, and in some cases, may be implemented as various apparatuses such as an image processing apparatus (e.g., set-top box, one connected box) that is connected to the display apparatus and provides an image.

In FIG. 1, another display apparatus 200 may be an independent apparatus provided separately from the display apparatus 100. In FIG. 1, another display apparatus 200 is illustrated as an apparatus of the same type as the display apparatus 100, but it is not necessarily limited thereto, and may be implemented as a different type of apparatuses, and may be implemented in a form in which three or more display apparatuses are connected.

In addition, for the convenience of description, another display apparatus 200 is described in the disclosure, but may be described as an external display apparatus or a sub-display apparatus.

Various embodiments of the disclosure to be described below are not necessarily performed only in a state in which the plurality of display apparatuses 100 and 200 are connected to each other as in FIG. 1, and may also be applied to a case in which one display apparatus 100 is connected and used alone. For example, even when an output abnormality occurs on the screen of the display apparatus 100 while the source apparatus 300 and the single display apparatus 100 are connected, the source apparatus 300 may update the image quality-related configuration information so that the source apparatus 300 transmits the image data whose configuration is changed to the display apparatus 100.

Referring to FIG. 1, the display apparatus 100 may be directly connected to the source apparatus 300. Accordingly, the display apparatus 100 may receive the image data from the source apparatus 300, and when the output abnormality of the display apparatus 100 is identified based on the received image data, update the image quality-related configuration information based on the identification result and transmit the updated configuration information to the source apparatus 300.

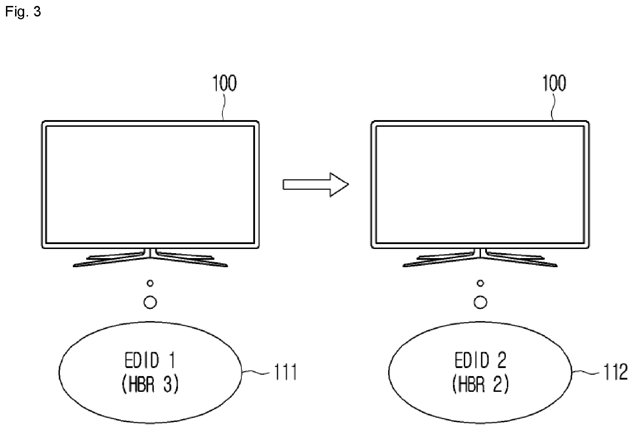

The updated image quality-related configuration information may mean the configuration information that allows the source apparatus 300 to transmit the image data whose configuration is changed. Specifically, when the updated image quality-related configuration information is transmitted to the source apparatus 300, the image data whose configuration is changed may be received from the source apparatus 300. The display apparatus 100 may output an image based on the image data whose configuration is changed. The change in the configuration information so that the source apparatus 300 may transmit the image data whose configuration is changed is expressed as an update of the configuration information, but means a case where the configuration information is changed to solve the output abnormality of the display apparatuses 100 and 200, and therefore, may be expressed in various ways such as reduction in the image data, change in the configuration information, and update of the configuration information. Specific examples for receiving the image data whose configuration is changed are described in detail in FIGS. 3 to 5.

The image quality-related configuration information means the configuration information that may determine the quality of the image output by the display apparatus 100, and may also be expressed as specification information, standard information, function information, or specification information. Specifically, the configuration information may include information on at least one of resolution, a refresh rate, a bandwidth, a color, MST mode information, HBR specification information, DP version, and a high dynamic range (HDR) of the display apparatus 100.

In FIG. 1, the display apparatus 100 may be directly connected to another display apparatus 200. Accordingly, the display apparatus 100 may receive image data from another display apparatus 200. In this case, the display apparatus 100 and another display apparatus 200 may be connected to the source apparatus 300 in a multi-stream transport (MST) mode. The MST mode refers to a mode in which multiple streams corresponding to each of the plurality of images are received from one port.

When using the multi-stream transport (MST) mode and the function for improving the image quality of the display apparatus 100 at the same time, the display apparatus 100 may identify the output abnormality of the display apparatus 100 based on the received image data and update the image quality-related information based on the identification result. Specifically, when the multi-stream transport (MST) mode and the function for improving the image quality of the display apparatus 100 are used at the same time, the required bandwidth between the source apparatus 300 and the display apparatuses 100 and 200 increases, and a data transmission amount may increase. When the data transmission amount between the source apparatus 300 and the display apparatuses 100 and 200 increases, the output abnormality may appear in the display apparatus 100 or another display apparatus 200.

When the MST mode and the HDR function are used at the same time and turned on, if a problem occurs due to the increase in the amount of data transmitted, a blackout phenomenon may occur on a screen 121 of the display apparatus 100 or a screen 221 of another display apparatus 200. For example, when the HDR specification of the display apparatus 100 is up to 10 bits and the source apparatus 300 transmits data with bits exceeding 10 bits, the display apparatus 100 may not receive data within a normal range, so the abnormal output may appear on the screen.

The function for improving the image quality may representatively include the high dynamic range (HDR) function. The HDR function refers to a function for expanding a contrast ratio and a color range to express an image vividly and realistically. However, the HDR function is not limited thereto, and may include various functions of improving image quality, such as wide color gamut (WCG), high frame rate (HFR), and Motion Smoothing (MEMC).

When the output abnormality appears in another display apparatus 200, the display apparatus 100 may receive image data from another display apparatus 200 and identify the output abnormality of another display apparatus 200 based on the received image data. Based on the identification result, the image quality-related configuration information may be updated, and the updated image quality-related configuration information may be transmitted to the source apparatus 300.

On the other hand, the display apparatus 100 may identify the output abnormality of another display apparatus 200, but another display apparatus 200 may also identify the output abnormality by itself. The display apparatus 100 may receive the information on the output abnormality identified by another display apparatus 200 and update the image quality-related configuration information. Even in this case, the display apparatus 100 may also transmit the updated image quality-related configuration information to the source apparatus 300.

In addition, when the output abnormality occurs in another display apparatus 200, the display apparatus 100 may update the image quality-related configuration information based on the output abnormality information of another display apparatus 200, but another display apparatus 200 may also update the image quality-related configuration information by itself. In this case, the display apparatus 100 may receive the updated image quality-related configuration information from another display apparatus 200, and transmit the received image quality-related configuration information to the source apparatus 300.

In FIG. 1, the display apparatus 100 is connected to the source apparatus 300 via a wired cable, and another display apparatus 200 is connected to the display apparatus 100 via the wired cable. In FIG. 1, the state of being connected via the wired cable is illustrated, but the display apparatus 100 and another display apparatus 200 or the source apparatus 300 may also be connected via a wireless communication method.

Specifically, each apparatus may be connected via a wide area network (WAN) such as the Internet, a local area network (LAN) formed around an access point (AP), and a short-range wireless network that does not pass through the access point (AP). The short-range wireless network may include Bluetooth^{™} (IEEE 802.15.1), Zigbee (IEEE 802.15.4), Wi-Fi Direct, near field communication (NFC), and Z-Wave, etc., but is not limited thereto.

The display apparatus 100 may store various programs. For example, various programs such as an application for identifying the output abnormality and updating the image quality-related configuration information may be stored. The display apparatus 100 may perform various operations as the program is executed.

The above description assumes a case where a plurality of display apparatuses are connected in the MST mode, but embodiments are not limited thereto. That is, it may be applied even when one display apparatus is connected to the source apparatus 300 or the plurality of display apparatuses are connected in the SST mode.

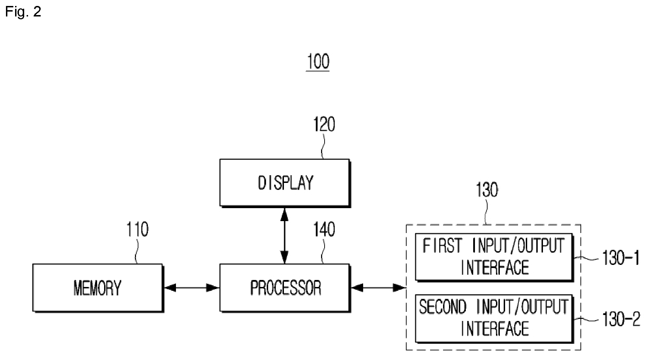

FIG. 2 is a block diagram illustrating a configuration of the display apparatus according to at least one embodiment of the disclosure.

The display apparatus 100 may include memory 110, a display 120, an input/output interface 130, and a processor 140.

The memory 110 may store at least one instruction, an operating system (O/S), a program, and image quality-related configuration information, etc., regarding the display apparatus 100. For example, the program that may identify the output abnormality of the display apparatus based on the received image data and update the image quality-related configuration information to resolve the output abnormality may be stored.

The image quality-related configuration information stored in the memory 110 may be updated when the received image data is received or may be updated when the output abnormality is received.

The memory 110 may be implemented in a form of a memory embedded in the display apparatus 100 and/or a memory detachable from the display apparatus 100, depending on a data storage purpose. For example, data for driving the display apparatus 100 may be stored in the memory 110 embedded in the display apparatus 100, and data for an extension function of the display apparatus 100 may be stored in the memory 110 detachable from the display apparatus 100.

The memory 110 embedded in the display apparatus 100 may include at least one of, for example, a volatile memory (for example, a dynamic random access memory (DRAM), a static RAM (SRAM), a synchronous dynamic RAM (SDRAM), or the like), a non-volatile memory (for example, a one time programmable read only memory (OTPROM), a programmable ROM (PROM), an erasable and programmable ROM (EPROM), an electrically erasable and programmable ROM (EEPROM), a mask ROM, a flash ROM, or the like), a flash memory (for example, a NAND flash, a NOR flash, or the like), a hard drive, and a solid state drive (SSD)).

The display 120 may display various types of information according to the control of the processor 140. The display 120 may be implemented as a display including a self-light emitting element or a display including a non-light emitting element and a backlight. In addition, the display 120 may be implemented as an LFD display. For example, the display 120 may be implemented as various types of displays such as a liquid crystal display (LCD), an organic light emitting diodes (OLED) display, light emitting diodes (LED), a micro LED, a Mini LED, a plasma display panel (PDP), a quantum dot (QD) display, and quantum dot light-emitting diodes (QLED). A driving circuit, a backlight unit, and the like, that may be implemented in the form such as an a-si thin film transistor (TFT), a low temperature poly silicon (LTPS), a TFT, an organic TFT (OTFT), and the like, may be included in the display 120.

According to an example, when the output abnormality is identified from the display apparatus 100 or another display apparatus 200, the processor 140 may update the image quality-related configuration information based on the identification result, receive the image data whose configuration is changed from the source apparatus 300 based on the updated image quality-related configuration information, and control the display 120 to output the image based on the image data whose configuration is changed.

The input/output interface 130 includes a circuit and is configured to perform communication with various electronic apparatuses. Specifically, a first input/output interface 130-1 may perform communication with the source apparatus 300, and a second input/output interface 130-2 may perform communication with another display apparatus 200. Specifically, the processor 140 may transmit the image quality-related configuration information to the source apparatus through the display port included in the first input/output interface. Here, the image quality-related configuration information may include the information on whether another display apparatus is connected to the second input/output interface. However, embodiments are not limited thereto, and communication with various electronic apparatuses other than the above-described apparatuses may be performed. In this case, when the image data corresponding to the configuration information is received from the source apparatus through the display port, the image corresponding to the image data may be output.

The processor 140 may receive various types of data or information, particularly image data, from another display apparatus 200 or the source apparatus 300 connected through the input/output interface 130.

For example, the processor 140 may receive the image data from another display apparatus 200 through the second input/output interface 130-2.

The processor 140 may also transmit the image data, the image quality-related configuration information, and other various types of data or information to another display apparatus 200 or the source apparatus 300 through the input/output interface 130. Specifically, the input/output interface 130 may include the first input/output interface 130-1 that receives the image data corresponding to the configuration information and the second input/output interface 130-2 that receives the image data from another display apparatus 200. However, the input/output interface 130 is not limited thereto, and may include a plurality of input/output interfaces.

The input/output interface 130 may include various wired interfaces such as a USB port, an HDMI port, a display port, an RGB port, a digital visual interface (DVI) port, a thunderbolt, and a component port, as well as various wireless interfaces such as a WiFi module, a Bluetooth module, a wireless communication module, an NFC module, and an ultra wide band (UWB) module.

The processor 140 controls the overall operation of the display apparatus 100. Specifically, the processor 140 may be connected to each component of the display apparatus 100 to control the operation of the display apparatus 100. The processor 140 may be composed of one or more processors.

The processor 140 may perform the operation of the display apparatus 100 according to various embodiments by executing one or more instructions stored in the memory 110.

The processors 140 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The processors 140 may control one or any combination of other components of the display apparatus 100 and may perform operations related to communication or data processing. The processor 140 may execute one or more programs or instructions stored in the memory 110. For example, one or more processors 140 may perform the method according to one or more embodiments of the disclosure by executing one or more instructions stored in the memory 110.

In the embodiments of the disclosure, the processor 140 may be a system-on-chip (SoC) in which one or more processors and other electronic components are integrated, a single-core processor, a multi-core processor, or a core included in the single-core processor or the multi-core processor. Here, the core may be implemented as CPU, GPU, APU, MIC, DSP, NPU, a hardware accelerator, a machine learning accelerator, or the like, but embodiments of the disclosure are not limited thereto.

In addition, when the received image data is out of the specification range supported by the display apparatus 100 based on the image quality-related configuration information, the processor 140 may identify the received image data as the output abnormality of the display apparatus 100. The specifications supported by the display apparatus 100 may include the image quality-related configuration information such as the resolution, the refresh rate, the bandwidth, the color, the MST mode information, the HBR specification information, the DP version, and the high dynamic range (HDR).

Hereinafter, the method for updating image quality-related configuration information by changing the high bit rate (HBR) specification information, the DisplayPort (DP) version information, and the MST mode according to various embodiments of the disclosure will be specifically described.

FIG. 3 is a diagram illustrating an example in which the display apparatus according to at least one embodiment of the disclosure updates the configuration information.

When the output abnormality of the display apparatus is identified based on the received image data, the processor 140 may update the image quality-related configuration information by changing the high bit rate (HBR) grade information in the image quality-related configuration information to a grade lower than the currently set HBR grade. The HBR refers to a data transmission speed grade of the DisplayPort standard for transmitting high-resolution video and audio signals, and the transmission speed of the image data may be determined according to the grade of the HBR.

For example, the processor 140 may reduce the data transmission amount by changing the configuration information from EDID1 111 in which the configuration information of HBR3, which transmits data at a maximum speed of 8.1 Gbps per lane, is stored to EDID2 112 in which the configuration information of HBR2, which transmits data at a maximum speed of 5.4 Gbps per lane, is stored. The EDID refers to a data format that transmits the configuration information on the functions supported by the display apparatus to the source apparatus, and may include the information such as the resolution, the refresh rate, the transmission speed, and the color depth. However, it is not limited to the case of changing to HBR2, and may be changed to various HBRs that support the lower transmission speed than the currently set HBR, such as HBR and HBR1.

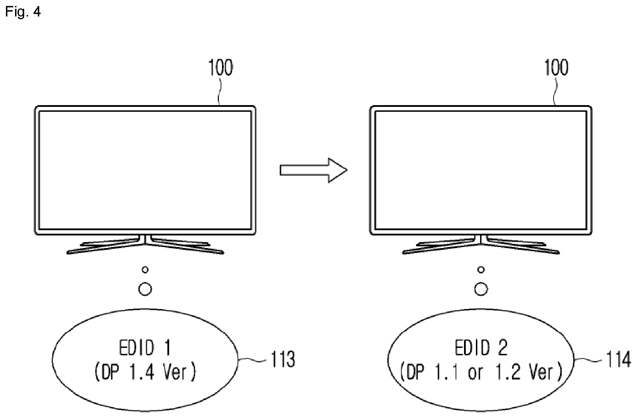

FIG. 4 is a diagram illustrating an example in which the display apparatus according to at least one embodiment of the disclosure updates the configuration information.

When identifying the output abnormality of the display apparatus based on the received image data, the processor 140 may update the image quality-related configuration information by changing the DisplayPort (DP) version information in the image quality-related configuration information to the lower version than the currently set DP version. The DP refers to an interface standard of the display apparatus used to transmit video and audio signals between the display apparatuses, and the supported bandwidth and data transmission speed may be determined according to the DP version.

For example, the processor 140 may change the data transmission amount by changing the configuration information from EDID1 113 where the configuration information of DP 1.4 version, which transmits data at a speed of 8.1 Gbps per lane, is stored to EDID2 114 where the configuration information of DP 1.1 (or 1.2) version, which transmits data at a speed of 5.4 Gbps per lane (or 2.16 Gbps per lane), is stored.

However, the configuration information is not limited to the above DP versions, and may be changed to various DP versions that support the lower transmission speed than the currently set DP version, such as DP1.0.

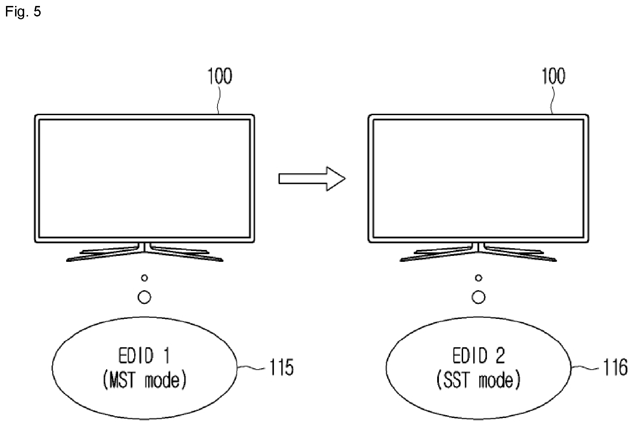

FIG. 5 is a diagram illustrating an example in which the display apparatus according to at least one embodiment of the disclosure updates the configuration information.

When the output abnormality of the display apparatus is identified based on the received image data, the processor 140 may update the image quality-related configuration information by changing the information supporting the MST mode in the image quality-related configuration information to the information supporting the single-stream transport (SST) mode. The SST mode refers to a mode that sets the display apparatus 100 to receive one data stream from the source apparatus 300.

For example, the bandwidth for processing the display signal may be reduced by changing the configuration information from EDID1 115 where information supporting the MST mode is stored to EDID2 116 where information supporting the SST mode is stored.

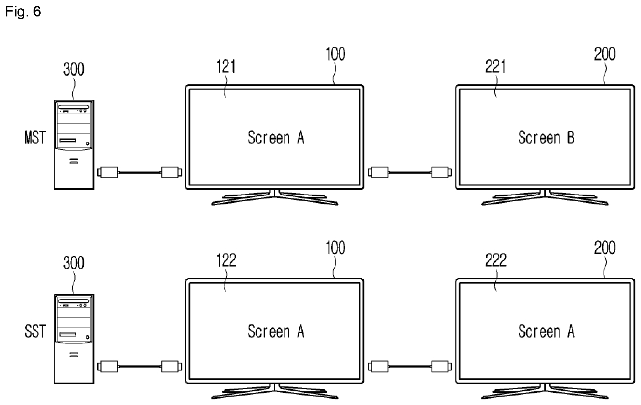

FIG. 6 is a diagram for describing an MST mode and an SST mode in the display apparatus according to at least one embodiment of the disclosure.

The MST mode is a mode that receives a plurality of streams corresponding to each of a plurality of images from one port, in which a first image corresponding to the display apparatus among the plurality of images is displayed through the display, and a second image corresponding to the another display apparatus is displayed through the another display apparatus. The SST mode refers to a mode that sets the display apparatus 100 to receive one data stream from the source apparatus 300. That is, when set to the MST mode, the source apparatus 300 divides the plurality of images so that different images are output to each display and transmits the divided images through two streams, and when set to the SST mode, the source apparatus 300 may transmit image data through one stream so that the same image is output to each display.

When the MST mode and the HDR function are turned on at the same time and used, if a problem such as compatibility occurs due to the increase in the amount of data transmitted, a blackout phenomenon may occur on the screen 121 of the display apparatus 100 or the screen 221 of another display apparatus 200. In this case, when the configuration information is updated in a way that the information supporting the MST mode in the image quality-related configuration information is changed to the information supporting the single-stream transport (SST) mode, the output abnormality occurring in the display apparatus 100 or another display apparatus 200 is resolved, and thus, normal screens 122 and 222 may be output.

In the above, examples of converting the MST mode to the SST mode or changing the DP version are described, but in addition to the examples described above, various changes in quality configuration that may change the data transmission amount may be applied during implementation.

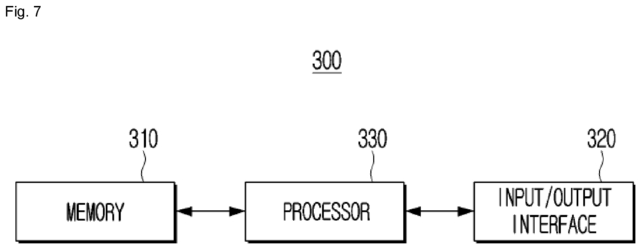

FIG. 7 is a block diagram illustrating a configuration of a source apparatus according to at least one embodiment of the disclosure.

The source apparatus refers to an apparatus that generates a display signal such as image data and transmits the generated display signal to another electronic apparatus. In FIG. 7, the source apparatus 300 is illustrated in the form of a PC, but the source apparatus 300 may be implemented as various types of electronic apparatuses such as a computer, a laptop, a tablet, a smartphone, a game console, etc. However, the display apparatus 100 is not limited thereto, and in some cases, may be implemented as various apparatuses such as an image processing apparatus (e.g., set-top box, one connected box) that is connected to the another electronic apparatus and provides an image data.

The source apparatus 300 may include a memory 310, an input/output interface 320, and a processor 330. Specific examples of the processor 330, the memory 310, and the input/output interface 320 have been described in the section in FIG. 2, so redundant description will be omitted.

The memory 310 may store various data, programs, commands, etc. used in the source apparatus 300. In addition, the memory 310 may store an application that may control the operation of the source apparatus 300 by performing communication with the display apparatus 100 and other display apparatuses 200 described above. As described above, when the image quality-related configuration information is received from the display apparatus 100, data may be transmitted with specifications such as full speed and bandwidth in a range corresponding to the configured information.

The memory 310 may store the existing configuration information or the updated configuration information of the display apparatus 100. Based on the stored configuration information, data may be transmitted with specifications such as full speed and bandwidth in a range corresponding to the configured information.

The processor 330 may receive the image data or the configuration information from the display apparatus 100 through the input/output interface 320 and transmit data in a range corresponding to the configured information to the display apparatus 100.

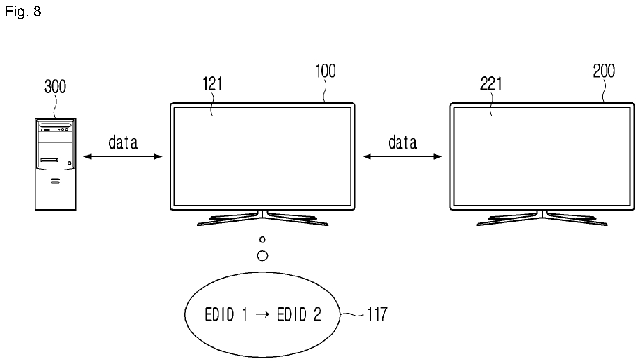

FIG. 8 is a diagram illustrating an example in which the display apparatus according to at least one embodiment of the disclosure updates the configuration information.

Referring to FIG. 8, various data may be transmitted unilaterally or bilaterally between the source apparatus 300, the display apparatus 100, and another display apparatus 200.

For example, when the output abnormality occurs on the screen 221 of another display apparatus 200, the information on the output abnormality may be transmitted to the display apparatus 100, and the display apparatus may update the image quality-related configuration information from the EDIE1 to EDID2 based on the information on the received output abnormality. In addition, when the updated configuration information is transmitted to the source apparatus 300, the data in the range corresponding to the updated configuration information may be received from the source apparatus 300. When the data corresponding to the updated configuration information is transmitted to another display apparatus 200, another display apparatus 200 may resolve the output abnormality phenomenon based on the data whose configuration is changed.

Embodiments are not limited to the case where the display apparatus 100 detects the output abnormality or updates the configuration information, and the operation of detecting the output abnormality or updating the configuration information may be performed in whole or in part by the source apparatus 300 or another display apparatus 200.

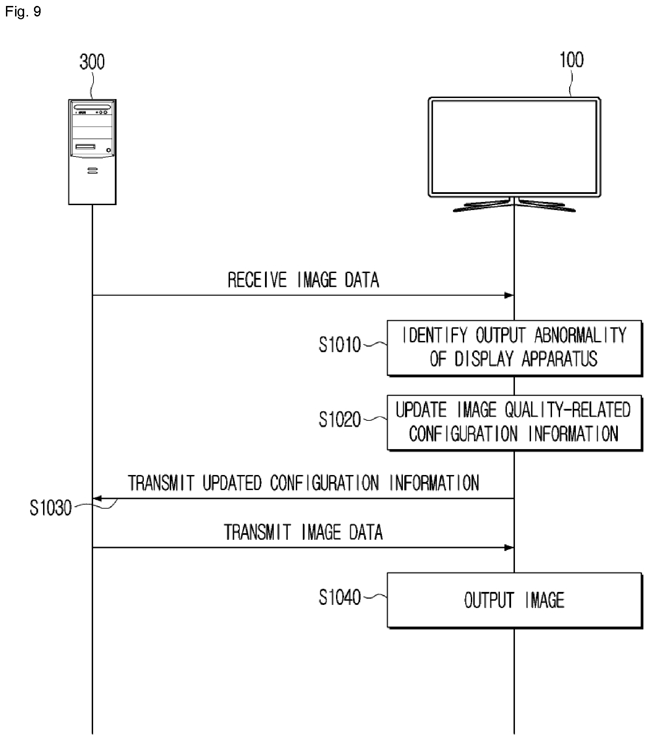

FIG. 9 is a sequence diagram for describing an operation order of the display apparatus and the source apparatus according to at least one embodiment of the disclosure.

In FIG. 9, the source apparatus 300 and the display apparatus 100 are illustrated as performing direct communication, but it is not necessarily limited thereto, and as illustrated in FIG. 1, another display apparatus 200 may be connected to the display apparatus 100, and the display apparatus 100 may relay communication between the source apparatus 300 and another display apparatus 200.

Referring to FIG. 9, the source apparatus 300 may generate image data and transmit the generated image data to the display apparatus 100. The display apparatus 100 may identify the output abnormality of the display apparatus 100 based on the received image data (S1010).

In addition, the display apparatus 100 may update the image quality-related configuration information based on the identification result in order to resolve the output abnormality phenomenon (S1020).

When the configuration information is updated, the display apparatus 100 may transmit the updated configuration information to the source apparatus 300 (S1030).

When the source apparatus 300 transmits the image data corresponding to the updated configuration information to the display apparatus 100, the display apparatus 100 may output the image based on the received image data (S1040). Here, the image quality-related configuration information includes information on whether another display apparatus is connected.

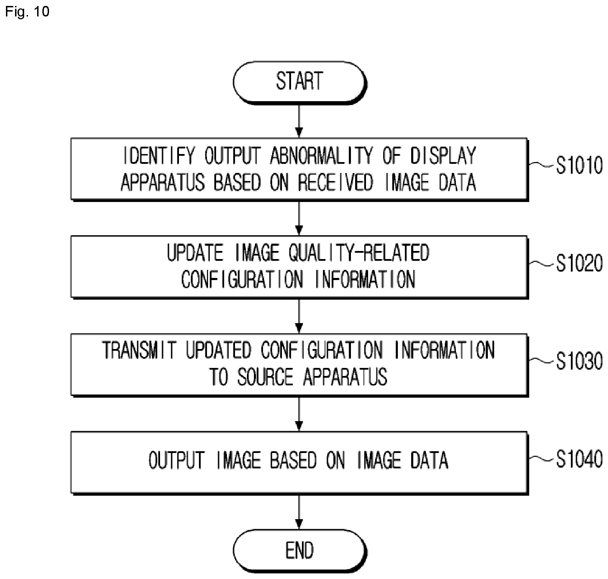

FIG. 10 is a flowchart for describing a method for outputting a display apparatus according to at least one embodiment of the disclosure.

The source apparatus 300 may generate image data and transmit the generated image data to the display apparatus 100. The display apparatus 100 may identify the output abnormality of the display apparatus 100 based on the received image data (S1010).

In addition, the display apparatus 100 may update the image quality-related configuration information based on the identification result in order to resolve the output abnormality phenomenon (S1020).

When the configuration information is updated, the display apparatus 100 may transmit the updated configuration information to the source apparatus 300 (S1030).

When the source apparatus 300 transmits the image data corresponding to the updated configuration information to the display apparatus 100, the display apparatus 100 may output the image based on the received image data (S1040). Here, the image quality-related configuration information includes information on whether another display apparatus is connected.

The above description is based on the case where the display apparatus outputs the image, but it is not necessarily limited to the display apparatus, and the same operation may be performed in various electronic apparatuses that have the function of resolving the output abnormality by performing communication with the source apparatus. For example, in the case of an audio apparatus that outputs voice data, the output abnormality phenomenon may be resolved by exchanging data with the source apparatus. For these types of electronic apparatuses, when the data causing the output abnormality phenomenon is provided, the output abnormality may be identified, and then the configuration information related to the voice quality may be updated and the updated configuration information may be transmitted to the source apparatus, etc.

Various embodiments described above may be implemented as embodiments alone, or at least one embodiment may be combined in whole or in part to be implemented together in one apparatus.

According to various embodiments described above, even if the output abnormality phenomenon occurs in the display apparatus, the output abnormality symptom may be automatically resolved without user manipulation. In other words, the convenience of the user may be expanded by automatically resolving the output abnormality problem by the display apparatus. In addition, the output abnormality phenomenon may be prevented based on the image data received before the output abnormality occurs.

Various embodiments of the disclosure may be implemented as software stored in a machine-readable storage media that may be installed or connected to the display apparatus, the source apparatus, and other various electronic apparatuses (e.g., a computer).

Specifically, there may be provided a non-transitory readable storage medium storing software for sequentially performing the steps of: when the image data is received from the source apparatus, identifying the output abnormality of the display apparatus based on the image data; updating the image quality-related configuration information; transmitting the updated image quality-related configuration information to the source apparatus; and when the image data whose configuration is changed is received from the source apparatus, outputting an image corresponding to the image data whose configuration is changed.

The apparatus equipped with the non-transitory readable storage medium may perform various operations such as identifying the output abnormality described in various embodiments described above, updating the configuration information, transmitting the updated configuration information, etc.

In the non-transitory readable-storage medium, the term "non-transitory" means that the storage medium is tangible without including a signal, and does not distinguish whether data are semi-permanently or temporarily stored in the storage medium.

Alternatively, a program for performing the method according to various embodiments described above may be distributed online through an application store. In a case of the online distribution, at least portions of the computer program product may be at least temporarily stored in a storage medium such as a memory of a manufacturer server, an application store server, or a relay server or be temporarily created.

Each of the components (for example, modules or programs) according to various embodiments may include a single entity or a plurality of entities, and some of the corresponding sub-components described above may be omitted or other sub-components may be further included in various embodiments. Alternatively or additionally, some of the components (e.g., the modules or the programs) may be integrated into one entity, and may perform functions performed by the respective corresponding components before being integrated in the same or similar manner. Operations performed by the modules, the programs, or the other components according to various embodiments may be executed in a sequential manner, a parallel manner, an iterative manner, or a heuristic manner, at least some of the operations may be performed in a different order or be omitted, or other operations may be added.

Although example embodiments of the disclosure have been illustrated and described hereinabove, the disclosure is not limited to the above-described example embodiments, but may be variously modified by those skilled in the art to which the disclosure pertains without departing from the gist of the disclosure as disclosed in the accompanying claims. These modifications should also be understood to fall within the scope and spirit of the disclosure.

## Claims

1. A display apparatus comprising:
memory configured to store instructions and image quality-related configuration information;
a display;
a first input/output interface comprising a display port;
a second input/output interface; and
at least one processor,
wherein the instructions, when executed by the at least one processor, cause the display apparatus to:
transmit the image quality-related configuration information to a source apparatus through the display port;
based on image data corresponding to the image quality-related configuration information being received from the source apparatus through the display port, control the display to display an image corresponding to the image data,
identify an output abnormality of the display apparatus based on the received image data, and
update the image quality-related configuration information based on the identified output abnormality, and
transmit the updated image quality-related configuration information to the source apparatus through the display port, and
wherein the image quality-related configuration information comprises information about whether another display apparatus is connected to the second input/output interface.

2. The display apparatus of claim 1, wherein the updated image quality-related configuration information is configuration information that causes the source apparatus to transmit the image data based on a configuration of the image data being changed.

3. The display apparatus of claim 1, wherein the instructions, when executed by the at least one processor, cause the display apparatus to, based on image data, having a configuration that is changed according the updated image quality-related configuration information, being received from the source apparatus , control the display to display an image based on the image data having the configuration that is changed.

4. The display apparatus of claim 1, wherein the instructions, when executed by the at least one processor, cause the display apparatus to, based on a multi-stream transport (MST) mode and a function of improving an image quality of the display apparatus being used at a same time:
identify the output abnormality of the display apparatus based on the received image data, and
update the image quality-related configuration information based on the identified output abnormality, and
wherein the MST mode is a mode in which a plurality of streams are received corresponding to each of a plurality of images from one port of the first input/output interface, a first image corresponding to the display apparatus among the plurality of images is displayed through the display, and a second image corresponding to the another display apparatus is displayed through the another display apparatus.

5. The display apparatus of claim 1, wherein the instructions, when executed by the at least one processor, cause the display apparatus to change high bit rate (HBR) grade information in the image quality-related configuration information to a specification lower than a currently set HBR grade, and
wherein the HBR is information that determines a transmission speed of the image data.

6. The display apparatus of claim 1, wherein the instructions, when executed by the at least one processor, cause the display apparatus to change DisplayPort (DP) version information in the image quality-related configuration information to a version lower than a currently set DP version.

7. The display apparatus of claim 1, wherein the instructions, when executed by the at least one processor, cause the display apparatus to change information supporting a multi-stream transport (MST) mode in the image quality-related configuration information to information supporting a single-stream transport (SST) mode, and
wherein the SST mode is a mode in which the display apparatus is set to receive one data stream from the source apparatus.

8. The display apparatus of claim 1, wherein the instructions, when executed by the at least one processor, cause the display apparatus to:
identify the output abnormality of the another display apparatus based on the image data received from the another display apparatus through the second input/output interface,
update the image quality-related configuration information based on the identified output abnormality, and
transmit the updated image quality-related configuration information to the source apparatus through the display port.

9. The display apparatus of claim 1, wherein the instructions, when executed by the at least one processor, cause the display apparatus to:
update the image quality-related configuration information based on information about the output abnormality received from the another display apparatus through the second input/output interface; and
transmit the updated image quality-related configuration information to the source apparatus through the display port.

10. The display apparatus of claim 1, wherein the instructions, when executed by the at least one processor, cause the display apparatus to, based on the updated image quality-related configuration information being received from the another display apparatus through the second input/output interface, transmit configuration information related to the received image quality to the source apparatus through the display port.

11. The display apparatus of claim 1, wherein the image quality-related configuration information comprises information about at least one of whether the another display apparatus is connected, resolution, a refresh rate, a bandwidth, a color, multi-stream transport mode information, high bit rate (HBR) specification information, a DisplayPort (DP) version, and a high dynamic range (HDR).

12. The display apparatus of claim 1, wherein the instructions, when executed by the at least one processor, cause the display apparatus to identify the received image data as the output abnormality of the display apparatus based on the received image data being out of a specification range supported by the display apparatus based on the image quality-related configuration information.

13. A method for outputting to a display apparatus, the method comprising:
based on image data being received from a source apparatus, identifying an output abnormality of the display apparatus based on the image data;
updating image quality-related configuration information based on the identified output abnormality;
transmitting the updated image quality-related configuration information to the source apparatus; and
based on image data corresponding to the updated image quality-related configuration information being received from the source apparatus, displaying an image corresponding to the received image data corresponding to the updated image quality-related configuration information,
wherein the image quality-related configuration information comprises information about whether another display apparatus is connected.

14. The method of claim 13, wherein the updated image quality-related configuration information is configuration information that causes the source apparatus to transmit the image data having a configuration that is changed.

15. A non-transitory computer-readable recording medium including a program executing a method for outputting to a display apparatus, wherein the method comprises:
based on image data being received from a source apparatus, identifying an output abnormality of the display apparatus based on the image data;
updating image quality-related configuration information based on the identified output abnormality;
transmitting the updated image quality-related configuration information to the source apparatus; and
based on image data corresponding to the updated image quality-related configuration information being received from the source apparatus, displaying an image corresponding to the received image data corresponding to the updated image quality-related configuration information, and
wherein the image quality-related configuration information comprises information about whether another display apparatus is connected.
